# EUROPEAN PATENT APPLICATION

(11) **EP 1 489 299 A1**
(43) Date of publication of application: **22.12.2004**
(21) Application number: 03425394.8
(22) Date of filing: 16.06.2003
(51) Int. Cl.: F03D 9/00, F03D 9/02, F04B 17/02

(54) **System for exploiting wind energy**

(71) Applicant: Sincron S.r.l., 20124 Milano (IT)
(72) Inventor: Russo, Vitaliano, 20135 Milano (IT)
(74) Representative: Botti, Mario

(57) **Abstract**

A system for exploiting aeolian energy, uniquely advantageous from the energetic and ecological point of view, comprises an aeolic rotor (6) and an air compressor (7) of the type for producing liquid air, the latter driven by the rotor (6). A desalination station (28) is provided whereby the liquid air from the compressor (7) is added to sea water by means of a plurality of nozzles (30).

## Description

### Field of Application

The present invention relates to a system for exploiting renewable natural energy, particularly aeolian energy, of the type comprising a rotor meant to be driven by renewable natural energy, particularly an aeolic rotor.

### Prior Art

As it is known, among systems satisfying the more and more impelling need of exploiting renewable natural energies, there are aeolic generators, which comprise a rotor being driven by the wind and in turn driving the rotor of a suitable electric machine, such as an alternator, for producing electric energy.

These systems have the drawback that not always the demand of electric energy follows the run of the wind. So, they can neither satisfy the demands of energy with no wind nor store not required energy.

It has been proposed to produce and store liquid hydrogen for using it according to the needs as fuel in a hydrogen engine, which is in turn connected with an electric machine for producing electric energy. However, an industrial implementation of such a suggestion has a drawback in the difficulty of ensuring duration and reliability of the hydrogen motors operation.

The underlying technical problem of this invention is to provide a system as indicated, which satisfies the above need, simultaneously overcoming the drawbacks with reference to the prior art.

This problem is solved by a system of the specified type, which is characterised in that it comprises an air compressor driven by the aeolic rotor. Preferably, the air compressor is a compressor of the type for producing liquid air.

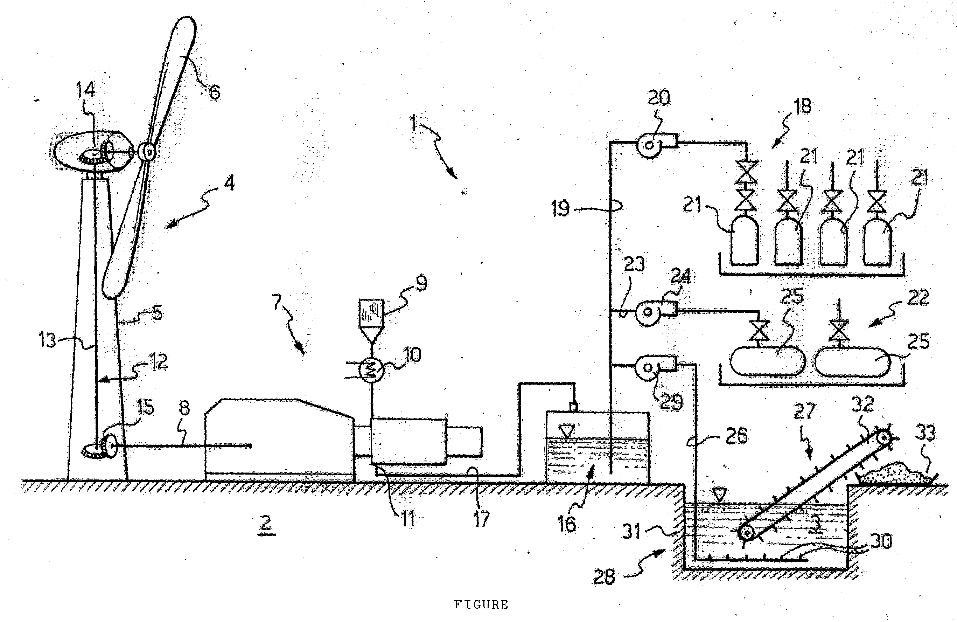

### Description of the Drawing

The figure shows a schematic elevation view of a system according to the invention.

### Detailed Description of the Invention

With reference to the drawing, 1 globally indicates a system for exploiting renewable natural energy, in particular for exploiting aeolian energy. The system 1 of the described embodiment is erected on land, in a longshore 3 site 2, but this does not avoid a possible offshore open sea installation.

The system 1 comprises a conventional so called windmill 4, e.g. of the type built and commercialised by Vestas or by Camesa.

The windmill 4 includes a tall tower 5 on land, which is rotatably supports at the top a rotor 6, rotation-driven by the wind. Since this windmill is conventional, it is not described in detail.

The system 1 further comprises an air compressor 7, which is of the type for producing liquid air and it is known per se, e.g. of the type built and commercialised by Ingersoll or Atlas Copco or Worthington. It is near the windmill 4, preferably at the base of the tower 5.

The compressor 7 is driven through a shaft 8, it sucks air from the ambient, the air being filtered through a filter 9 and dehumified by a dehumidifier 10, it produces liquid air and deliver it through an outlet 11. Since this compressor is known per sé, it is not described in detail.

A driveline 12 is provided for transmitting the motion from the windmill 4 to the compressor 7, and precisely for transmitting motion from the rotor 6 to the shaft 8 of the compressor 7. The driveline 12 is a mechanical one and includes a shaft 13 extending along the tower. The shaft 13, on top, is made rotation-rigid with the rotor 6 by a pair of conical toothed wheels globally indicated with 14, whereas at the bottom it is made rigid with the shaft 8 by means of a couple of conical toothed wheels, globally indicated with 15.

Thus, the compressor 7 is mechanically linked to the rotor 6 and it is driven by the aeolic energy.

The system 1 also comprises a tank 16, which is adjacent to the compressor 7 and it is connected with its outlet 11 by means of a line 16, for storing the liquid air produced by the compressor 7.

The system further comprises a conveying station 18, which receives liquid air through a line 19, which is connected to the tank 16 and whereon a pump 20 is provided. A plurality of cylinders 21 are filled in the conveying station 18, which have a limited prefixed capacity, e.g. 20 litres, so that they can be easily transported.

The system 1 further includes a conveying station 22, which receives liquid air through a line 23, which is connected to the tank 16 and whereon a pump 24 is provided. In the conveying station 22 a plurality of medium capacity, e.g. 200 litres, tanks 25 are filled.

The system 1 also includes a distribution network 26 for distributing liquid air to user outlets 27 according to the needs.

In a preferred embodiment of the invention, the user outlet 27 is a desalinating station 28 for desalinating the sea water. In the desalinating station 28 the distribution network 26 is provided with a pump 29 and it ends with a plurality of nozzles 30, which are dipped in a seawater basin 31. The desalinating station 28 is completed with a carrier 32 extending between the basin 31, wherefrom it takes the ice formed further to the outcome of liquid air from the nozzle 30, and a collecting tub 33, wherein it pours the ice itself, for its subsequent melting for obtaining fresh water.

The main advantage of the system according to the invention is that it allows to exploit renewable natural energy, and particularly the aeolian energy occasionally available, providing preferably liquid air, which is easy to be stored in small volumes, and it is uniquely advantageous to be used from an energetic point of view, because, as cold source, it is able to extract heat from the ambient for all useful purposes, in particular to generate work.

Another important advantage of the system according to the invention is that it is uniquely advantageous from an ecological point of view, since, in practice, it only contains air, and any alien possibly polluting or damaging or inflammable element is completely absent.

Obviously a skilled in the art can apply several modifications and variations to the engine unit, to the method and to the generator above-described, in order to satisfy occasional and specific needs, all of them included in the scope of the invention, as defined in the following claims.

## Claims

1. A system for exploiting a renewable natural energy, particularly aeolian energy, of the type comprising a rotor (6), meant to be driven by renewable natural energy, particularly an aeolic rotor, **characterised in that** it comprises an air compressor (7) driven by said rotor (6).

2. A system according to Claim 1, **characterised in that** it comprises a driveline (12) between the rotor (6) and the compressor (7).

3. A system according to Claim 1, **characterised in that** the compressor (7) is of the type for producing liquid air.

4. A system according to Claim 3, **characterised in that** it comprises a liquid-air storing tank (16), in fluid communication with the compressor (7).

5. A system according to Claim 3, **characterised in that** it comprises a conveying station (18) of the liquid air, in transportable cylinders (21) of prefixed limited capacity, preferably 20 litres.

6. A system according to Claim 3, **characterised in that** it comprises a conveying station (22) of the liquid air, in tanks (25) of prefixed medium capacity, preferably 200 litres.

7. A system according to Claim 3, **characterised in that** it comprises a distribution network (26), for delivering liquid air to a prefixed user outlet (27) according to the needs.

8. A system according to Claim 7, **characterised in that** said user outlet is a desalinating station (28) of sea water and that said distribution network (26) ends with a plurality of nozzles (30), meant to be dipped in seawater, for freezing thereof.

9. A system for exploiting a renewable natural energy, particularly aeolian energy, of the type comprising a rotor (6), meant to be driven by renewable natural energy, particularly an aeolic rotor, **characterised in that** it includes an air compressor (7) of the type for producing liquid air, said compressor being driven by said rotor (6), and a desalinating station (28) of sea water, including a plurality of nozzles (30) dipped in seawater to deliver therein the liquid air from the compressor.
